(19) Europäisches Patentamt
European Patent Office
Office européen des brevets

(11) **EP 4 733 329 A1**

(12) **EUROPEAN PATENT APPLICATION**

(43) Date of publication:
**29.04.2026 Bulletin 2026/18**

(21) Application number: **24209195.7**

(22) Date of filing: **28.10.2024**

(51) International Patent Classification (IPC):
**C08F 4/02** (2006.01)          **C08F 4/654** (2006.01)
**C08F 110/06** (2006.01)

(52) Cooperative Patent Classification (CPC):
(C-Sets available)
**C08F 110/06**                    (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Borealis GmbH**
**1020 Vienna (AT)**

(72) Inventors:
• **METSÄNEN, Toni**
**06850 Kulloo (FI)**
• **LEINONEN, Ritva**
**06850 Kulloo (FI)**

(74) Representative: **HGF**
**HGF Limited**
**4th Floor, 1 City Square**
**Leeds LS1 2ES (GB)**

(54) **PREPARATION OF MAGNESIUM CHLORIDE COMPLEX FOR SIRIUS ZN CATALYST SYNTHESIS FROM WET MGCL2**

(57)     A process for producing a solid Ziegler-Natta catalyst component is described. The process comprises the steps : I. providing a solution of a Group 2 metal dihalide (IUPAC, Nomenclature of Inorganic Chemistry, 2005) by dissolving a solid Group 2 metal dihalide starting material in an alcohol mixture comprising a monohydric alcohol (A1) of formula ROH, where R is selected from a hydrocarbyl group of 3 to 16 carbon atoms and an second alcohol (A2) comprising in addition to the hydroxyl group an ether moiety, wherein the ether moiety comprises from 2 to 18 carbon atoms, preferably the second alcohol (A2) is a C2 to C4 glycol monoether, wherein the solid Group 2 metal dihalide starting material in an the alcohol mixture is heated to above 80 °C, preferably 90 °C to 160 °C, more preferably 100 °C to 140 °C, wherein the heating is conducted under a flow of an inert gas, preferably under a flow of nitrogen gas; II. contacting the solution of the Group 2 metal dihalide of step I with a compound in a liquid form of a transition metal of Group 4 to 10 of the Periodic Table (IUPAC, Nomenclature of Inorganic Chemistry, 2005), or of a lanthanide or actinide, preferably a transition metal of Group 4 to 6 of the Periodic Table (IUPAC, Nomenclature of Inorganic Chemistry, 2005); and III. recovering the solid catalyst component; wherein the amount of Group 2 metal originating from Group 2 metal dihalide constitutes 100 % of the whole amount of the Group 2 metal used in the process for producing the solid Ziegler-Natta catalyst component. The invention also relates to a Ziegler-Natta catalyst component obtainable by the process and also a Ziegler-Natta catalyst comprising the Ziegler-Natta catalyst component. The invention further relates to a process for producing polymers from a-olefins in the presence of the Ziegler-Natta catalyst and use of the Ziegler-Natta catalyst component for producing of C2 to C10 olefin polymers and copolymers thereof.

EP 4 733 329 A1

(52) Cooperative Patent Classification (CPC): (Cont.)

C-Sets
**C08F 110/06, C08F 4/022;**
**C08F 110/06, C08F 4/6465;**
**C08F 110/06, C08F 4/651;**
**C08F 110/06, C08F 4/6545;**
C08F 110/06, C08F 2500/12, C08F 2500/18

**Description**

**FIELD OF THE INVENTION**

The invention relates to a process for producing a solid Ziegler-Natta catalyst component. The invention also relates to a Ziegler-Natta catalyst component obtainable by the process and also a Ziegler-Natta catalyst comprising the Ziegler-Natta catalyst component. The invention further relates to a process for producing polymers from $\alpha$-olefins in the presence of the Ziegler-Natta catalyst and use of the Ziegler-Natta catalyst component for producing of C2 to C10 olefin polymers and copolymers thereof.

**BACKGROUND**

Ziegler-Natta type polyolefin catalysts are well known in the field of producing olefin polymers, like C2 to C10 olefin polymers and copolymers thereof with other alpha-olefins of 2 to 12 C-atoms. Generally, the catalysts comprise at least a catalyst component formed from a compound of a transition metal of Group 4 to 10, or of lanthanide or actinide of the Periodic Table (IUPAC, Nomenclature of Inorganic Chemistry, 2005), a compound of a metal of Group 1 to 3 of the Periodic Table (IUPAC), optionally, a compound of a metal Group 13 of the Periodic Table (IUPAC), and optionally, an internal organic compound, like an internal electron donor. A Ziegler-Natta catalyst may also comprise further catalyst component(s), such as a cocatalyst and optionally an external electron donor.

A great variety of Ziegler-Natta catalysts have been developed to accommodate the needs of different reaction conditions and for producing poly(alpha-olefin) resins of desired physical and mechanical performance. Typical Ziegler-Natta catalysts contain a magnesium compound, a titanium compound and optionally an aluminium compound supported on a particulate support. The commonly used particulate supports are Mg dihalide, for example $MgCl_2$ based supports, or inorganic oxide type supports, such as silica, alumina, titania, silica-alumina or silica-titania, typically silica.

Typical Ziegler-Natta catalysts with $MgCl_2$ based supports contain titanium derived from a titanium compound and optionally a Group 13 metal derived from a Group 13 metal compound, for example, aluminium derived from an aluminium compound. EP 376936 A1, EP 591224 A1, WO 2005/118655 and EP 810235 A1 disclose catalysts of this type disclosing also spray-drying or spray-crystallisation methods for producing $MgCl_2$-based support materials.

EP 1042331 A1 and EP 0926165 A1 disclose catalyst preparation methods, where $MgCl_2$ is used as a compound forming complexes with in situ prepared donors, being phthalic donors. Catalysts are prepared by precipitation.

$MgCl_2$ may be used as a raw material in preparation of supported Ziegler-Natta catalysts. An adduct of $MgCl_2$ and a monohydric short chain (e.g. C1 to C6) alkyl alcohol, typically ethanol, may be formed, which is then reacted with titanium tetrachloride and with a donor, like a phthalate. In some preparation processes $MgCl_2$ may also be dissolved in an alcohol, like 2-ethylhexanol, resulting in formation of magnesium dichloride alcoholates, which are complexes of $MgCl_2$ and an alcohol, and which are used in further catalyst preparation steps. Solubility of $MgCl_2$ in the alcohol is reasonable low, whereby typically a high excess of alcohol is needed in order to get $MgCl_2$ dissolved.

Group 2 metal dihalides (for example $MgCl_2$) are commonly used in the synthesis of Ziegler-Natta catalysts and Ziegler-Natta catalyst components, as they are useful for the formation of a support material of the catalyst. Group 2 metal dihalides commonly form strong interactions with water, meaning that they commonly may be hygroscopic and difficult to fully dry - this is the case for $MgCl_2$. Despite their utility, the water content of group 2 metal dihalides used in the preparation of Ziegler-Natta catalysts and Ziegler-Natta catalyst components has a significant impact on catalyst performance. For example, differing trace moisture levels of $MgCl_2$ powder between batches can have a significant impact on Ziegler-Natta catalyst efficiency and so significant differences in the physical properties of the polymers obtained using the Ziegler-Natta catalysts. In some cases some batches of group 2 metal dihalide raw material will contain too much water for the catalyst synthesis, meaning no active catalyst can be obtained. Commercially available anhydrous group 2 metal dihalides, including commercially available anhydrous $MgCl_2$, typically contain some small amount of water, with the amount of water varying between batches, suppliers, etc., which may mean that catalyst preparation may be complicated by either having to rely on a particular batch/supplier of group 2 metal dihalides and/or processing (where the processing includes a drying step) the commercially available anhydrous group 2 metal dihalide. This drying step of commercially available anhydrous group 2 metal dihalides before synthesis of a catalyst component/catalyst is sometimes referred to as "pre-drying".

To overcome the challenge of moisture levels in group 2 metal dihalides, some prior art discusses using an azeotropic distillation followed by evaporation to dryness to remove water from group 2 metal dihalide raw material prior to catalyst component/catalyst synthesis. Azeotropic distillation with evaporation to dryness may use a suitable hydrocarbon solvent.

The tolerance for water in the group 2 metal dihalides used to prepare catalysts/catalyst components allows for a narrow range of water to be present, it is not necessary for the group 2 metal dihalides to be fully anhydrous.

Zhang et al. (Can. Metall. Q., 1992, 31, 189-194) discloses two processes for preparing anhydrous magnesium chloride by use of alcohols. Zhang et al. discusses that some alcohols can replace water to form coordinates with $MgCl_2$,

and make the dehydration of magnesium chloride much easier. The possibility of dehydration by alcohol distillation is discussed, and n-butanol was found to be the preferred solvent. For the system $MgCl_2$-$H_2O$-$C_4H_9OH$, the relations between temperature and liquid-gas compositions were investigated. Zhang et al. discusses that under optimum conditions, almost all the water can be removed by butanol distillation to obtain anhydrous $MgCl_2$ powder having a low level of MgO, where the butanol distillation process evaporates the system to dryness. Another process is also discussed in Zhang et al., the preparation of anhydrous magnesium chloride from carnallite by alcohol leaching. Zhang et al. discusses that the dehydration of carnallite ($MgCl_2 \cdot KCl \cdot 6H_2O$) is much easier than for $MgCl_2 \cdot 6H_2O$, but anhydrous carnallite used as bath feed will cause the accumulation of alkaline chlorides. Zhang et al. discusses that because the solubilities of $MgCl_2$ and KCl or NaCl are very different, they can be separated from each other by alcohol leaching. Anhydrous carnallite was treated with ethanol to dissolve $MgCl_2$, leaving KCl and NaCl in the residue. Then the solution was heated to dryness to remove all the alcohol, the anhydrous $MgCl_2$ powder obtained containing $MgCl_2$ 99.62%, MgO 0.18%, KCl 0.03% and others 0.14%.

WO 2021/175836 A1 discloses a process for producing a solid Ziegler-Natta catalyst component in the form of solid particles having a median particle size ($D50_{vol}$) of 5 to 500 $\mu$m and the process comprising steps I. providing a solution of a Group 2 metal dihalide (IUPAC, Nomenclature of Inorganic Chemistry, 2005) by dissolving a solid Group 2 metal dihalide in an alcohol mixture comprising at least a monohydric alcohol (A1) of formula ROH, where R is selected from a hydrocarbyl group of 3 to 16 C atoms and an alcohol (A2) comprising in addition to the hydroxyl group another oxygen containing functional group not being a hydroxyl group, contacting the solution of the Group 2 metal dihalide of step I with a compound in a liquid form of a transition metal of Group 4 to 10, or of a lanthanide or actinide, preferably a transition metal of Group 4 to 6 of Periodic Table (IUPAC, Nomenclature of Inorganic Chemistry, 2005), and III. recovering the solid catalyst component, wherein the amount of Group 2 metal originating from Group 2 metal dihalide constitutes 100 % of the whole amount of the Group 2 metal used in the process for producing the solid Ziegler-Natta catalyst component.

## SUMMARY OF THE INVENTION

A first aspect of the present invention relates to process for producing a solid Ziegler-Natta catalyst component, the process comprising steps:

I. providing a solution of a Group 2 metal dihalide (IUPAC, Nomenclature of Inorganic Chemistry, 2005) by dissolving a solid Group 2 metal dihalide starting material in an alcohol mixture comprising a monohydric alcohol (A1) of formula ROH, where R is selected from a hydrocarbyl group of 3 to 16 carbon atoms and a second alcohol (A2) comprising in addition to the hydroxyl group an ether moiety, wherein the ether moiety comprises from 2 to 18 carbon atoms, preferably the second alcohol (A2) is a C2 to C4 glycol monoether,

wherein the Group 2 metal dihalide starting material in the alcohol mixture is heated to above 80 °C, preferably in the range of from 90 °C to 160 °C, more preferably in the range of from 100 °C to 140 °C,

wherein the heating is conducted under a flow of an inert gas, preferably under a flow of nitrogen gas;

II. contacting the solution of the Group 2 metal dihalide of step I with a compound in a liquid form of a transition metal of Group 4 to 10 of the Periodic Table (IUPAC, Nomenclature of Inorganic Chemistry, 2005), or of a lanthanide or actinide, preferably a transition metal of Group 4 to 6 of the Periodic Table (IUPAC, Nomenclature of Inorganic Chemistry, 2005) thereby providing a solid catalyst component; and

III. recovering the solid catalyst component;

wherein the amount of Group 2 metal originating from Group 2 metal dihalide constitutes 100 % of the whole amount of the Group 2 metal used in the process for producing the solid Ziegler-Natta catalyst component.

A second aspect of the present invention relates to a process for producing a solid Ziegler-Natta catalyst component, the process comprising steps:

I. providing a solution of a Group 2 metal dihalide (IUPAC, Nomenclature of Inorganic Chemistry, 2005) by dissolving a solid Group 2 metal dihalide starting material in an alcohol mixture comprising a monohydric alcohol (A1) of formula ROH, where R is selected from a hydrocarbyl group of 3 to 16 carbon atoms, and a second alcohol (A2) comprising in addition to the hydroxyl group an ether moiety, wherein the ether moiety comprises from 2 to 18 carbon atoms, preferably the second alcohol (A2) is a C2 to C4 glycol monoether,

wherein the Group 2 metal dihalide starting material in the alcohol mixture is heated to above 80 °C, preferably in the range of from 90 °C to 160 °C, more preferably in the range of from 100 °C to 140 °C,

wherein the solution of the Group 2 metal dihalide has a moisture content of below 1200 ppm, preferably below 1000 ppm, more preferably below 900 ppm measured by Karl Fischer titration,

optionally wherein the heating is conducted under a flow of an inert gas, preferably under a flow of nitrogen gas;

II. contacting the solution of the Group 2 metal dihalide of step I with a compound in a liquid form of a transition metal of Group 4 to 10 of the Periodic Table (IUPAC, Nomenclature of Inorganic Chemistry, 2005), or of a lanthanide or actinide, preferably a transition metal of Group 4 to 6 of the Periodic Table (IUPAC, Nomenclature of Inorganic Chemistry, 2005) thereby providing a solid catalyst component; and

III. recovering the solid catalyst component;

wherein the amount of Group 2 metal originating from Group 2 metal dihalide constitutes 100 % of the whole amount of the Group 2 metal used in the process for producing the solid Ziegler-Natta catalyst component.

Advantageously, the process of the invention (according to either the first or second aspect) allows use of a wider range of raw materials, for example because wetter Group 2 metal dihalide starting material can be used in the present process compared with prior art processes. For example, Group 2 metal dihalide starting materials having 0 wt% to 5 wt% of water can be used with the process of the invention. Further, the process may provide a simpler operation, as the solid Group 2 metal dihalide starting material can be dried for use during the dissolving in alcohol step, meaning that there is no need for a pre-drying step. Pre-drying steps may be operationally challenging in the context of solid Ziegler-Natta catalyst preparation because of the sensitivity to moisture levels of the catalyst preparation and the hygroscopicity of the Group 2 metal dihalide, meaning careful storage and handling of the dried Group 2 metal dihalide may be required. Using the process of the invention the storage and handling of dried Group 2 metal dihalide may be avoided. The process may also provide more robust and reliable access to the Group 2 metal dihalide solution. In addition, the process of the invention may be more energy efficient, for example because the drying step occurs together with the step of dissolving the Group 2 metal dihalide in the alcohol mixture, rather than performing these steps separately.

A third aspect of the invention relates to a Ziegler-Natta catalyst component obtainable, preferably obtained, by the process according to the first aspect or the second aspect.

A fourth aspect of the invention relates to a Ziegler-Natta catalyst comprising a Ziegler-Natta catalyst component according to the third aspect or prepared by the process according to the first aspect or prepared by the process according to the second aspect, a cocatalyst of group 13 compound (IUPAC, Nomenclature of Inorganic Chemistry, 2005), preferably an aluminium compound and optionally an external electron donor.

A fifth aspect of the invention relates to a process for producing polymers from $\alpha$-olefins having 2 to 10 carbon atoms or copolymers thereof with C2 to C12 $\alpha$-olefin comonomers in the presence of the Ziegler-Natta catalyst according to the fourth aspect.

A sixth aspect relates to a use of the Ziegler-Natta catalyst component according to the third aspect, or prepared by the process according to the first aspect or the second aspect, for producing of C2 to C10 olefin polymers and copolymers thereof with C2 to C12 olefin comonomers.

## DETAILED DESCRIPTION

A first aspect of the present invention relates to process for producing a solid Ziegler-Natta catalyst component, the process comprising steps:

I. providing a solution of a Group 2 metal dihalide (IUPAC, Nomenclature of Inorganic Chemistry, 2005) by dissolving a solid Group 2 metal dihalide starting material in an alcohol mixture comprising a monohydric alcohol (A1) of formula ROH, where R is selected from a hydrocarbyl group of 3 to 16 carbon atoms and a second alcohol (A2) comprising in addition to the hydroxyl group an ether moiety, wherein the ether moiety comprises from 2 to 18 carbon atoms, preferably the second alcohol (A2) is a C2 to C4 glycol monoether,

wherein the Group 2 metal dihalide starting material in the alcohol mixture is heated to above 80 °C, preferably in the range of from 90 °C to 160 °C, more preferably in the range of from 100 °C to 140 °C,

wherein the heating is conducted under a flow of an inert gas, preferably under a flow of nitrogen gas;

II. contacting the solution of the Group 2 metal dihalide of step I with a compound in a liquid form of a transition metal of Group 4 to 10 of the Periodic Table (IUPAC, Nomenclature of Inorganic Chemistry, 2005), or of a lanthanide or actinide, preferably a transition metal of Group 4 to 6 of the Periodic Table (IUPAC, Nomenclature of Inorganic Chemistry, 2005) thereby providing a solid catalyst component; and

III. recovering the solid catalyst component;

wherein the amount of Group 2 metal originating from Group 2 metal dihalide constitutes 100 % of the whole amount of the Group 2 metal used in the process for producing the solid Ziegler-Natta catalyst component.

A second aspect of the present invention relates to process for producing a solid Ziegler-Natta catalyst component the process comprising steps:

I. providing a solution of a Group 2 metal dihalide (IUPAC, Nomenclature of Inorganic Chemistry, 2005) by dissolving a solid Group 2 metal dihalide starting material in an alcohol mixture comprising a monohydric alcohol (A1) of formula ROH, where R is selected from a hydrocarbyl group of 3 to 16 carbon atoms and a second alcohol (A2) comprising in addition to the hydroxyl group an ether moiety, wherein the ether moiety comprises from 2 to 18 carbon atoms, preferably the second alcohol (A2) is a C2 to C4 glycol monoether,

wherein the Group 2 metal dihalide starting material in the alcohol mixture is heated to above 80 °C, preferably in the range of from 90 °C to 160 °C, more preferably in the range of from 100 °C to 140 °C,

wherein the solution of the Group 2 metal dihalide has a moisture content of below 1200 ppm, preferably below 1000 ppm, more preferably below 900 ppm measured by Karl Fischer titration

optionally wherein the heating is conducted under a flow of an inert gas, preferably under a flow of nitrogen gas;

II. contacting the solution of the Group 2 metal dihalide of step I with a compound in a liquid form of a transition metal of Group 4 to 10 of the Periodic Table (IUPAC, Nomenclature of Inorganic Chemistry, 2005), or of a lanthanide or actinide, preferably a transition metal of Group 4 to 6 of the Periodic Table (IUPAC, Nomenclature of Inorganic Chemistry, 2005) thereby providing a solid catalyst component; and

III. recovering the solid catalyst component;

wherein the amount of Group 2 metal originating from Group 2 metal dihalide constitutes 100 % of the whole amount of the Group 2 metal used in the process for producing the solid Ziegler-Natta catalyst component.

Unless otherwise stated, all features and advantages related to a process for producing a solid Ziegler-Natta catalyst component discussed herein apply to both the first and second aspect, and by extension to the later aspects by virtue of the use of the process of the first and second aspects.

Suitably the Group 2 metal dihalide in the solution of the Group 2 metal dihalide of step I is the only source of Group 2 metal in the process for producing the solid catalyst component. Suitably the glycol portion of the second alcohol (A2) is a C2 to C18 glycol.

Advantageously, the process of the invention (according to either the first or second aspect) allows use of a wider range of raw materials, for example because wetter Group 2 metal dihalide starting material can be used in the present process compared with prior art processes. Processes of the invention may achieve this by excess water in the starting material being removed during step I. by co-evaporation with the alcohols, with the water in the vapour optionally being removed from the system by a flow of an inert gas. That a wider range of Group 2 metal dihalide starting materials can be used using the present disclosure than the prior art can be seen from the experimental data provided in the Examples, see e.g. tables 1 and 2. There is a need to provide processes which can utilise a wider range of raw materials because the Group 2 metal dihalide starting materials used in the preparation of Ziegler-Natta catalysts are commonly highly hydroscopic and may exist in a variety of (for example, a mixture of) different hydrated forms. The process of the present disclosure can therefore be employed with "lower quality" starting materials which may contain a mixture of hydration states/hydration amounts. These "lower quality" starting materials would in prior art processes either have to undergo a further pre-drying step (energy intensive and operationally complex as the hydroscopic product needs be stored) or be discarded. The process of the present disclosure removes the need for a separate pre-drying step.

In some examples, the group 2 metal dihalide is a magnesium dihalide. Preferably the group 2 metal dihalide is a magnesium dichloride ($MgCl_2$). Preferably the group 2 metal dihalide comprises chloride. More preferably the group 2 metal dihalide is a dichloride.

In some examples, in step I the total amount of liquid in the alcohol mixture decreases due to evaporation, preferably wherein the total amount of liquid in the alcohol mixture decreases by 3 vol% relative to the initial amount of liquid in the alcohol mixture, more preferably wherein the total amount of liquid in the alcohol mixture decreases by 5 vol% relative to the initial amount of liquid in the alcohol mixture, even more preferably wherein the total amount of liquid in the alcohol mixture decreases by 10 vol% relative to the initial amount of liquid in the alcohol mixture.

Suitably the monohydric alcohol (A1) is a chiral alcohol, for example 2-ethylhexanol. Suitably the monohydric alcohol (A1) is a racemate of a chiral alcohol, for example ($\pm$)-2-ethylhexanol. Suitably the monohydric alcohol (A1) is a scalemic mixture of a chiral alcohol, for example a scalemic mixture of 2-ethylhexanol. Suitably the monohydric alcohol (A1) is a single enantiomer of a chiral alcohol. Suitably the monohydric alcohol (A1) is (R)-2-ethylhexanol. Suitably the monohydric alcohol (A1) is (S)-2-ethylhexanol. Suitably the monohydric alcohol (A1) is a diastereomeric mixture. Suitably the monohydric alcohol (A1) is a single diastereomer, for example a single diastereomer that is a single enantiomer. Suitably the monohydric alcohol (A1) is an enantiomeric pair of a single diastereomer, for example a racemate of a single diastereomer.

Suitably the second alcohol (A2) is a chiral alcohol. Suitably the second alcohol (A2) is a racemate of a chiral alcohol. Suitably the second alcohol (A2) is a scalemic mixture of a chiral alcohol. Suitably the second alcohol (A2) is a single enantiomer of a chiral alcohol. Suitably the second alcohol (A2) is a diastereomeric mixture. Suitably the second alcohol (A2) is a single diastereomer, for example a single diastereomer that is a single enantiomer. Suitably the second alcohol (A2) is an enantiomeric pair of a single diastereomer, for example a racemate of a single diastereomer.

In some examples, the solid Group 2 metal dihalide starting material comprises water, optionally comprises greater than 0.5 wt% of water, greater than 1 wt% water, greater than 1.5 wt% water, greater than 2 wt% water, or greater than 3 wt% water. In some examples the solid Group 2 metal dihalide starting material comprises greater than 0.5 wt% water. In some examples the solid Group 2 metal dihalide starting material comprises greater than 1 wt% water. In some examples the solid Group 2 metal dihalide starting material comprises greater than 2 wt% water. In some examples the solid Group 2 metal dihalide starting material comprises greater than 3 wt% water. In some examples the solid Group 2 metal dihalide starting material comprises in the range of from 0.5 wt% to 5 wt% water. In some examples the solid Group 2 metal dihalide starting material comprises from 1 wt% to 5 wt% water. In some examples the solid Group 2 metal dihalide starting material comprises from 1.5 wt% to 5 wt% water. In some examples the solid Group 2 metal dihalide starting material comprises from 2 wt% to 5 wt% water. In some examples the solid Group 2 metal dihalide starting material comprises from 3 wt% to 5 wt% water. In this paragraph the wt% are calculated relative to the total weight of the solid Group 2 metal dihalide starting material.

In some examples, the solution of the Group 2 metal dihalide of step I has a moisture content of below 1200 ppm, preferably below 1000 ppm, more preferably below 900 ppm measured by Karl Fischer titration. In some examples, the solution of the Group 2 metal dihalide of step I has a moisture content of below 1000 ppm measured by Karl Fischer titration. In some examples, the solution of the Group 2 metal dihalide of step I has a moisture content of below 900 ppm measured by Karl Fischer titration.

In some examples, the Group 2 metal dihalide is $MgCl_2$ and the solid Group 2 metal dihalide starting material comprises $MgCl_2$, optionally wherein:

(i) the monohydric alcohol (A1) is 2-ethylhexanol;

(ii) the second alcohol (A2) is propylene glycol monobutyl ether; or

(iii) the monohydric alcohol (A1) is 2-ethylhexanol and the second alcohol (A2) is propylene glycol monobutyl ether.

In some examples, the Group 2 metal dihalide is $MgCl_2$ and the solid Group 2 metal dihalide starting material comprises $MgCl_2$ and the monohydric alcohol (A1) is 2-ethylhexanol. In some examples, the Group 2 metal dihalide is $MgCl_2$ and the solid Group 2 metal dihalide starting material comprises $MgCl_2$ and the second alcohol (A2) is propylene glycol monobutyl ether. In some examples, the Group 2 metal dihalide is $MgCl_2$ and the solid Group 2 metal dihalide starting material comprises $MgCl_2$ and the monohydric alcohol (A1) is 2-ethylhexanol and the second alcohol (A2) is propylene glycol monobutyl ether.

In some examples, the transition metal compound is a Group 4 to 6 transition metal compound, preferably a Group 4 transition metal compound, most preferably titanium tetrachloride. In some examples, the transition metal compound is a Group 4 to 6 transition metal compound. In some examples, the transition metal compound is a Group 4 transition metal compound. In some examples, the transition metal compound is titanium tetrachloride.

In some examples, the molar ratio of monohydric alcohol (A1) : second alcohol (A2) in the alcohol mixture of step I prior to heating is in the range of 2.5:1 to 8:1, preferably in the range of 3:1 to 6:1, more preferably in the range of 3.5:1 to 5:1, and still more preferably is 4:1. In some examples, the molar ratio of monohydric alcohol (A1): second alcohol (A2) in the alcohol mixture of step I prior to heating is in the range of 2.5:1 to 8:1. In some examples, the molar ratio of monohydric alcohol (A1): second alcohol (A2) in the alcohol mixture of step I prior to heating is in the range of 3:1 to 6:1. In some examples, the molar ratio of monohydric alcohol (A1): second alcohol (A2) in the alcohol mixture of step I prior to heating is in the range of 3.5:1 to 5:1. In some examples, the molar ratio of monohydric alcohol (A1): second alcohol (A2) in the alcohol mixture of step I prior to heating is 4:1.

In some examples, the solution of the Group 2 metal dihalide obtained in step I contains a lower total water content than the water content of the solid Group 2 metal dihalide starting material, wherein the total water content refers to the total mass of water present. The skilled person would be aware of how to optimise the flow of an inert gas used in step I from their common general knowledge.

In some examples, the molar ratio of alcohols:Group 2 metal is at least 1.0, preferably at least 1.5, more preferably is in the range of 1.5 to 10, even more preferably 2.0 to 4.0, wherein the alcohols comprise all alcohols of the alcohol mixture and the molar ratio is calculated relative to the amounts added in step I.

In some examples, one or more solubility increasing agent(s) is/are added in step I, optionally wherein the solubility increasing agent is selected from aliphatic hydrocarbon solvents, aromatic hydrocarbon solvents and other co-solvents comprising internal electron donors. Suitable solubility increasing agent(s) include benzene, toluene, cumene, xylol, pentane, hexane, heptane, octane and nonane. Toluene, heptane and pentane are particular preferred.

Internal electron donor refers to a substance which is present in the process of catalyst/catalyst component preparation which stabilises the catalyst/catalyst component through interaction with high valency metal ions. Internal electron donor refers to an electron donor which is present in the process of catalyst/catalyst component preparation. The term "internal electron donor" is in contrast with the term "external electron donor", which refers to an electron donor which is added during the polymerization process (e.g. at the beginning of the polymerization process). Used herein the terms "internal electron donor" and "internal donor" have the same meaning. Used herein the terms "external electron donor" and "external donor" have the same meaning. Suitably the internal electron donor may comprise alcohols. Suitably the internal electron donor may consist of alcohols. Suitably the internal electron donor may comprise the monohydric alcohol (A1) and the second alcohol (A2). Suitably the internal electron donor may consist of the monohydric alcohol (A1) and the second alcohol (A2). Suitably the internal electron donor may comprise the monohydric alcohol (A1). Preferably the internal electron donor comprises the second alcohol (A2).

Suitably the internal electron donor is selected from esters of non-phthalic (di)carboxylic acids, in particular esters belonging to a group comprising non-substituted or substituted malonates, non-substituted or substituted maleates, like citraconates, succinates, glutarates, cyclohexene-1,2-dicarboxylates and benzoates, and any derivatives and/or mixtures thereof. Especially preferred examples are e.g. substituted maleates, more preferably citraconates, especially di-2-ethylhexyl citraconate.

Suitably the second alcohol (A2) is butoxy propanol.

A third aspect of the invention relates to a Ziegler-Natta catalyst component obtainable, preferably obtained, by the process according to the first aspect or the second aspect. In some examples, the Ziegler-Natta catalyst component is obtained by the process according to the first aspect. In some examples, the Ziegler-Natta catalyst component is obtained by the process according to the second aspect. In some examples, the Ziegler-Natta catalyst component is obtained by the process according to the first aspect or the second aspect.

In some examples, the amount of transition metal of Group 4 to 10, preferably Ti, is in the range of 1 to 6 wt%, the amount of Group 2 metal, preferably Mg, is in the range of 10 to 20 wt% and/or the amount of internal donor is in the range of 5 to 35 wt% based on the total weight of in the solid catalyst component, preferably wherein the amount of transition metal of Group 4 to 10, preferably Ti, is in the range of 2 to 4 wt%, preferably the amount of Group 2 metal, preferably Mg, is in the range of 15 to 19 wt% and/or preferably the amount of the internal donor is in the range of 10 to 20 wt% in the solid catalyst component. In some examples, the amount of transition metal of Group 4 to 10, preferably Ti, is in the range of 2 to 4 wt%, the amount of Group 2 metal, preferably Mg, is in the range of 15 to 19 wt% and the amount of the internal donor is in the range of 10 to 20 wt% in the catalyst component.

A fourth aspect of the invention relates to a Ziegler-Natta catalyst comprising a Ziegler-Natta catalyst component according to the third aspect or prepared by the process according to the first aspect or the second aspect, a cocatalyst of group 13 compound (IUPAC, Nomenclature of Inorganic Chemistry, 2005), preferably an aluminium compound and optionally an external electron donor. In some examples, the cocatalyst is an aluminium compound. In some examples, the cocatalyst is a group 13 compound and an external electron donor is present. In some examples, the Ziegler-Natta catalyst comprises a Ziegler-Natta catalyst component according to the third aspect. In some examples, the Ziegler-Natta catalyst comprises a Ziegler-Natta catalyst component prepared by the process according to the first aspect. In some examples, the Ziegler-Natta catalyst comprises a Ziegler-Natta catalyst component prepared by the process according to the second aspect.

A fifth aspect of the invention relates to a process for producing polymers from $\alpha$-olefins having 2 to 10 carbon atoms or copolymers thereof with C2 to C12 $\alpha$-olefin comonomers in the presence of the Ziegler-Natta catalyst according to the fourth aspect.

A sixth aspect relates to a use of the Ziegler-Natta catalyst component according to the third aspect, or prepared by the process according to the first aspect or the second aspect, for producing of C2 to C10 olefin polymers and copolymers thereof with C2 to C12 olefin comonomers. In some examples, the use of the Ziegler-Natta catalyst component is according to the third aspect. In some examples, the use of the Ziegler-Natta catalyst component is the use of the Ziegler-Natta catalyst component prepared by the process according to the first aspect. In some examples, the use of the Ziegler-Natta catalyst component is the use of the Ziegler-Natta catalyst component prepared by the process according to the second aspect.

Suitably the alcohol mixture consists of alcohols (A1) and (A2).

The monohydric alcohol (A1) is preferably an alcohol of formula ROH, where R is a hydrocarbyl group of 3 to 12 C atoms, more preferably 5 to 12 C atoms. Still more preferably A1 is selected from linear or branched hexanol, heptanol and octanol. An especially preferred monohydric alcohol is 2-ethyl-hexanol. The second (A2) comprises an ether group. The ether moiety comprises from 2 to 18 carbon atoms, preferably from 2 to 10 carbon atoms, more preferably 2 to 6 carbon atoms. Most preferably, the second alcohol (A2) is a C2 to C4 glycol monoether.

The solubility of Group 2 metal dihalide can be increased by adding solubility increasing agents. Such agents suitably used in the present process are aliphatic or aromatic hydrocarbon solvents. In addition other co-solvents, which do not disturb or deteriorate catalyst manufacturing or catalyst performance, may be used. Such co-solvents may be suitably internal electron donors used in the catalyst preparation.

According to the procedure of the invention, the solid catalyst component may be obtained via a precipitation method or via an emulsion-solidification method depending on the physical conditions, especially on the temperature used in the contacting step II. Emulsion is also called a liquid/liquid two-phase system.

In both methods (precipitation or emulsion-solidification) the catalyst chemistry may be the same.

In the precipitation method combining the solution of the Group 2 metal dihalide in the mixture of alcohols with the at least one transition metal compound is carried out and the whole reaction mixture is kept at least at 50 °C, more preferably at the temperature in the range of 55 to 110 °C, more preferably in the range of 70 to 100 °C, to secure full precipitation of the catalyst component in form of a solid particles.

In the emulsion-solidification method the solution of the Group 2 metal dihalide in the mixture of alcohols as herein defined is added to the at least one transition metal compound at a lower temperature, such as from -10 to below 50 °C, preferably at a temperature in the range of -5 to 30 °C, wherein an emulsion is formed. During agitation of the emulsion the temperature is typically kept at -10 to below 40 °C, preferably from -5 to 30 °C. Droplets of the dispersed phase of the emulsion form the catalyst component. Solidification of the droplets is suitably carried out by heating the emulsion to a temperature of 70 to 150 °C, preferably to 80 to 110 °C.

In the emulsion-solidification method, the dispersed phase in the form of liquid droplets of the emulsion forms the catalyst particles, which is transformed to solid catalyst component during the solidification step.

The catalyst component prepared by emulsion-solidification method is preferred.

In the emulsion-solidification method, the formation of the liquid/liquid two-phase system (emulsion) may be facilitated by adding (further) solvent(s) and additives, such as surfactants. Surfactants act as emulsifying agents, which are used in a manner known in the art for facilitating the formation of and/or stabilizing the emulsion. Preferably, surfactants used in the present invention are acrylic or methacrylic polymers. Particular preferred surfactants are unbranched C12 to C20 (meth)acrylates such as poly(hexadecyl)-methacrylate and poly(octadecyl)-methacrylate and mixtures thereof. Surfactants may added at any step before the recovery step III. Surfactants may also be used in preparing a catalyst component by the above precipitation method.

Before the final recovery the solid particulate catalyst component produced according to the process of the invention may be washed at least once, preferably at least three times, most preferably at least five times with aromatic and/or aliphatic hydrocarbons, preferably with toluene, heptane or pentane and/or with TiCl$_4$. Said washing solutions may also contain internal donor(s) and/or compound(s) of Group 13, like trialkyl aluminum, halogenated alkyl aluminum compounds or alkoxy aluminum compounds. The aluminum compounds may also be added during the catalyst component synthesis. The catalyst component can further be dried, e.g. by evaporation or flushing with nitrogen before the final recovery. If desired, the catalyst component may be slurried to an oily liquid with or without any drying step.

The finally obtained Ziegler-Natta catalyst component of the invention is desirably in the form of spherical particles having volumetric median particle size (D50$_{vol}$) in the range of from 5 to 500 $\mu$m, preferably from 5 to 300 $\mu$m, more preferably 5 to 200 $\mu$m

Particle size distribution (PSD) of the catalyst component is desired to be narrow. PSD is typically defined as a relative distribution based on volumetric amount of particles, i.e. as volumetric SPAN (SPAN$_{vol}$).

$$SPAN_{vol} = (D90_{vol} - D10_{vol})/D50_{vol}$$

where

   D90$_{vol}$ = particle diameter at 90% cumulative volume,

D10$_{vol}$ = particle diameter at 10% cumulative volume,

D50$_{vol}$ = particle diameter at 50% cumulative volume (median particle size, vol)

PSD of the catalyst component depends on the catalyst preparation process, and may vary in broad ranges. However, narrow PSD, i.e. small SPAN is typically a desired feature of the solid catalyst component. Thus, the PSD of the solid catalyst component, defined by SPAN$_{vol}$ may be at most 1.5, more preferably at most 1.3, even more preferably at most 1.1. Catalysts prepared by the specific inventive method may have SPAN$_{vol}$ even below 1.0.

The catalyst components prepared by the method as described above have preferably a surface area of less than 20 m$^2$/g, more preferably of less than 10 m$^2$/g.

Catalyst component preparation with emulsion-solidification method makes it possible to obtain solid catalyst with low SPAN$_{vol}$ and low surface area.

The catalyst of the invention comprises, in addition to the solid catalyst component as defined above, a cocatalyst, which is also known as an activator and optionally an external electron donor.

Cocatalysts are preferably organometallic compounds of Group 13 metal, typically aluminium compounds. These compounds include aluminium alkyls and alkyl aluminium halides. Preferably, the alkyl group is a C1-C8 alkyl group, preferably C1-C4 alkyl group, and the halide is a chloride. Preferably the co-catalyst (Co) is a tri (C1-C4) alkylaluminium, di(Ci-C4)alkyl aluminium chloride or (CrC4)alkyl aluminium dichloride or mixtures thereof. Most preferably, the alkyl group is ethyl. In one specific embodiment, the co-catalyst (Co) is triethylaluminium (TEA).

External electron donors are typically used in propylene polymerization, however also known to have been used in ethylene polymerization.

Suitable external electron donors (ED) include certain silanes, ethers, esters, amines, ketones, heterocyclic compounds and blends thereof. It is especially preferred to use silanes selected from silanes of the general formula (A)

$$R^a_p R^b_q Si(OR^c)_{(4-p-q)} \qquad \text{(A)}$$

wherein R$^a$, R$^b$ and R$^c$ are independently same or different a linear, branched or cyclic hydrocarbon group having 1 to 12 carbon atom, in particular an alkyl or cycloalkyl group, and wherein p and q are numbers ranging from 0 to 3 with their sum p + q being equal to or less than 3; or

silanes of general formula (B)

$$Si(OCH_2CH_3)_3(NR^3R^4) \qquad \text{(B)}$$

wherein R$^3$ and R$^4$ can be the same or different and represent a linear, branched or cyclic hydrocarbon group having 1 to 12 carbon atoms. Preferably, R$^3$ and R$^4$ are independently selected from the group consisting of methyl, ethyl, n-propyl, n-butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl, and are more preferably ethyl.

Most preferably external donors are selected form silanes of formula (A) and especially selected from (tert-butyl)$_2$Si(OCH$_3$)$_2$, (cyclohexyl)(methyl)Si(OCH$_3$)$_2$, (cyclopentyl)$_2$Si(OCH$_3$)$_2$ and (phenyl)$_2$Si(OCH$_3$)$_2$.

The catalyst of the present invention may be used for polymerizing C2 to C10 olefin, preferably C2 to C6 olefin, optionally with one or more comonomers. Most commonly produced olefin polymers are polyethylene, polypropylene and copolymers thereof. The catalyst of the present invention is especially suitable for producing polypropylene and copolymers thereof. Commonly used comonomers are ethylene and alpha-olefin comonomers preferably selected from C4-C20-alpha-olefins, more preferably are selected from ethylene and C4-C12-alpha-olefins, such as 1-butene, isobutene, 1-pentene, 1-hexene, 4-methyl-1-pentene, 1-heptene, 1-octene, 1-nonene and 1-decene, as well as dienes, such as butadiene, 1,7-octadiene and 1,4-hexadiene, or cyclic olefins, such as norbornene, and any mixtures thereof. Most preferably, the comonomer is ethylene, 1-butene and/or 1-hexene.

According to a preferred embodiment the catalyst component of the present invention is in the form of solid spherical particles and is free of any external support material, like silica or any separately prepared MgCl$_2$ based support. The solid catalyst component is prepared by the process as described above.

According to the preferred preparation method the solution of group 2 metal dihalide in the mixture of alcohols as described above, at least one compound of a transition metal of Group 4 to 6, most preferably a TiCl$_4$, and an internal electron donor or precursor thereof are contacted and reacted in solution, and after that the solid catalyst component particles are formed either by precipitation or preferably by forming an emulsion and further solidifying the droplets of the emulsion. Suitably the solid catalyst component particles are featured by a uniform distribution of catalytically active sites thorough the catalyst component particles.

*Polymerization*

Catalyst of the present invention can be used in any commonly used uni- and multimodal processes for producing polyolefins. The polymerizations may be operated in slurry, solution, or gas phase reactors or combinations thereof. Typically ethylene and propylene (co)polymers are produced in commercial scale in a multimodal process configuration. Such multimodal polymerization processes known in the art comprise at least two polymerization stages. It is preferred to operate the polymerization stages in cascaded mode. Suitable processes comprising cascaded slurry and gas phase polymerization stages are disclosed, among others, in WO 92/12182 and WO 96/18662 and WO 98/58975.

In a multimodal polymerization configuration, the polymerization stages comprise polymerization reactors selected from slurry and gas phase reactors. In one preferred embodiment, the multimodal polymerization configuration comprises at least one slurry reactor, followed by at least one gas phase reactor.

The catalyst may be transferred into the polymerization process by any means known in the art. It is thus possible to suspend the catalyst in a diluent and maintain it as homogeneous slurry. Especially preferred is to use oil having a viscosity from 20 to 1500 mPa·s as diluent, as disclosed in WO-A-2006/063771. It is also possible to mix the catalyst with a viscous mixture of grease and oil and feed the resultant paste into the polymerization zone. Further still, it is possible to let the catalyst settle and introduce portions of thus obtained catalyst mud into the polymerization zone in a manner disclosed, for instance, in EP-A-428054.

The polymerization in slurry may take place in an inert diluent, typically a hydrocarbon diluent such as methane, ethane, propane, n-butane, isobutane, pentanes, hexanes, heptanes, octanes etc., or their mixtures. Preferably, the diluent is a low-boiling hydrocarbon having from 1 to 4 carbon atoms, like propane or a mixture of such hydrocarbons. In propylene polymerization the propylene monomer is usually used as the reaction medium.

The temperature in the slurry polymerization is typically from 40 to 115 °C, preferably from 60 to 110 °C and in particular from 70 to 100 °C, like from 70 to 90 °C. The pressure is from 1 to 150 bar, preferably from 10 to 100 bar.

The slurry polymerization may be conducted in any known reactor used for slurry polymerization. Such reactors include a continuous stirred tank reactor and a loop reactor. It is especially preferred to conduct the polymerization in loop reactor. Hydrogen is fed, optionally, into the reactor to control the molecular weight of the polymer as known in the art. Furthermore, one or more alpha-olefin comonomers may be added into the reactor. The actual amount of such hydrogen and comonomer feeds depends on the desired melt index (or molecular weight), density or comonomer content of the resulting polymer.

The polymerization in gas phase may be conducted in a fluidized bed reactor, in a fast fluidized bed reactor or in a settled bed reactor or in any combination of these.

Typically the fluidized bed or settled bed polymerization reactor is operated at a temperature within the range of from 50 to 100 °C, preferably from 65 to 90 °C. The pressure is suitably from 10 to 40 bar, preferably from 15 to 30 bar.

Also antistatic agent(s) may be introduced into the slurry and/or gas phase reactor if needed. The process may further comprise pre- and post-reactors, for example there may be a pre-polymerization reactor upstream of one or more subsequent slurry loop reactors, where the one or more slurry loop reactors are in turn upstream of one or more gas phase reactors.

The actual polymerization steps may be preceded by a pre-polymerization step. The pre polymerization step may be conducted in slurry or in gas phase. Preferably pre-polymerization is conducted in slurry, and especially in a loop reactor. The temperature in the pre polymerization step is typically from 0 °C to 90 °C, preferably from 20 °C to 80 °C and more preferably from 30 °C to 70 °C.

The operating pressure used in the polymerization reactors is not critical and is typically from 1 to 150 bar, preferably from 10 to 100 bar. Typically the operating pressure in loop reactors is higher than in gas phase reactors. For example the operating pressure in the gas phase reactor(s) may be from 5 to 30 barg and the loop reactor(s) may be from 50 to 100 bar.

The polymerization may be carried out continuously or batch wise, preferably the polymerization is carried out continuously in commercial scale polymerization.

*Definitions*

Used herein 2-EHA refers to 2-ethylhexanol. Unless otherwise specified, 2-EHA used herein refers to the racemate of 2-ethylhexanol.

Used herein PGBE refers to propylene glycol monobutyl ether. Used herein the terms propylene glycol monobutyl ether and butoxy propanol are synonymous.

Used herein ppm refers to the amount of a substance expressed as parts per million by weight.

Used herein TEA refers to triethyl aluminium.

**Measurement methods**

**ICP-OES**

A test portion of 20-50 mg sample was inertly sampled in a crimp cap glass vial. Volume of 5 mL of $HNO_3$ (65 %) and distilled and deionized water were added into the sample vial and the mixture was stirred until the sample had fully dissolved. Sample solution was transferred into 100 mL volumetric flask and filled to mark with distilled and deionized water. Sample solution was filtered through two 0.45 $\mu$m filters into a test tube for measurement.

The elemental analysis was performed using Thermo Scientific Inductively Coupled Plasma - Optical Emission Spectrometer (ICP-OES) iCAP PRO XP Duo. The instrument was calibrated for Al, Ti and Mg using a blank (a solution of 5 % $HNO_3$), and 6 standards of 0.005, 0.01, 0.1, 1, 10 and 100 mg/L of Al, Ti and Mg in solutions of 5 % $HNO_3$ in deionized water. The content of Mg is monitored using the 279.553 nm and the content for Ti using 334.941 nm line. The content of Al is monitored via the 167.079 nm line. The reported values are an average of three successive aliquots taken from the same sample and are related back to the original sample by inputting the original mass of test portion and the dilution volume into the software.

**GC-FID**

For $MgCl_2$ solutions:

A portion of about 50 mg of $MgCl_2$ solution were sampled inertly in crimp-cap glass vial is dissolved and extracted by mixture of 5 mL of dichloromethane and 1.0 mL of solution of internal standard (0.71 V/V-%) in distilled water. After sonicating the mixture for 30 minutes to ensure full dissolution, the phases are let to settle and the organic phase is sampled and filtered using 0.45 $\mu$m syringe filter to instrument vial. GC analysis was carried out using Agilent 7890B Gas Chromatogram system equipped with flame ionization detector. The column used was a ZB-5HT Inferno 15 m x 320 $\mu$m x 0.25 $\mu$m with a pre-column restriction capillary of 1.5 m x 320 or 150 $\mu$m x 0 $\mu$m. The initial oven temperature is set to 40 °C for 3 minutes before the ramp program consisting of first ramp at 5 °C/min to 70 °C, second ramp at 40 °C/min to 330 °C and third ramp of 20 °C/min to 350 °C with a hold time of 1 min. The injection volume was 1 $\mu$L with split ratio of 1:20. The carrier gas was 99.996 % He. The inlet and FID were operated at 280 °C and 370 °C, respectively. Signal from FID in chromatogram was integrated and calculated against a series of standardization samples, using the response ratios between the signal for the internal donor and the internal standard. Two parallel measurements were performed from each sample and the analyte contents were reported as the mean of the two replicates.

For catalysts samples:

A portion of about 60-90 mg of dry catalyst sampled inertly in crimp-cap glass vial is dissolved and extracted by mixture of 5 mL of dichloromethane and 1.0 mL of solution of internal standard (0.71 V/V-%) in distilled water. After sonicating the mixture for 30 minutes to ensure full dissolution, the phases are let to settle and the organic phase is sampled and filtered using 0.45 $\mu$m syringe filter to instrument vial. GC analysis was carried out using Agilent 7890B Gas Chromatogram system equipped with flame ionization detector. The column used was a ZB-5HT Inferno 15 m x 320 $\mu$m x 0.25 $\mu$m with a pre-column restriction capillary of 1.5 m x 320 or 150 $\mu$m x 0 $\mu$m. The initial oven temperature is set to 40 °C for 3 minutes before the ramp program consisting of first ramp at 5 °C/min to 70 °C, second ramp at 40 °C/min to 330 °C and third ramp of 20 °C/min to 350 °C with a hold time of 1 min. The injection volume was 1 $\mu$L with split ratio of 1:20.

The carrier gas was 99.996 % He. The inlet and FID were operated at 280 °C and 370 °C, respectively. Signal from FID in chromatogram was integrated and calculated against a series of standardization samples, using the response ratios between the signal for the internal donor and the internal standard. Two parallel measurements were performed from each sample and the internal donor content was reported as the mean of the two replicates.

**Water content analysis**

Solid samples were analyzed according to EN ISO 15512:2019 - Method B2.

Liquid samples were analyzed by coulometric Karl Fischer titration. The titrator used was 851 Titrando with diaphragm by Metrohm. As such, for the measurement of liquid samples, the term "Karl Fischer titration" used herein refers to coulometric Karl Fischer titration performed under an inert atmosphere wherein the titrator used is 851 Titrando with diaphragm by Metrohm. Hydranal® Coulomat E was used as titration solutions. The measurement process was carried out under inert atmosphere. The solutions in titration cell was stirred using 803 Ti Stand by Methrom. An analytical balance with accuracy of 0.1 mg was used to record the sample mass. Hydranal® Coulomat E was used as single titration reagent in both cathodic and anodic cells. The instruments were placed inside a glove box and the measurement process was carried out under inert atmosphere. The used equipment were dried at 60 °C for several hours prior use. The titrator instrument is performing automatic conditioning when started, no calibration is required. The operation performance of the titrator was confirmed prior sample measurements by measuring a certified water standard (100 ppm/0.1 wt-%), where accepted result deviates maximum 5 % from the certified value. A portion of sample solution was drawn into syringe through a septum cap, and the analytical balance was tared with the filled syringe. The amount of sample was varied according to expected water content targeting to sample portion containing 50 - 1000 $\mu$g of water. An automated titration program was started on computer, followed by injection of the sample into titration vessel through a septum inlet. The mass of the syringe with sample residues was recorded with the analytical balance. The accurate mass of injected sample portion was entered in titration program for result calculations. Titrator detects the endpoint potentiometrically and calculates the amount of water in the fed sample solution automatically based on the consumed electronic current.

**Polymerization**

A 5 Liter stainless steel reactor was used for propylene polymerizations. In bench-scale propene bulk polymerization, D-donor (dicyclopentyl dimethoxysilane, Al/donor molar ratio = 10) was used as the external donor and triethyl aluminum (TEA, Al/Ti = 250 mol/mol) as the cocatalyst. Polymerization temperature was 80 °C and stirring speed 450 rpm. TEA (TEA-S, Chemtura, used as received), Donor D (from Shin-Etsu Silicones Europe B.V., dried with molecular sieves) and 30 ml n-pentane (Exxsol Pentane 100S, received from BorstarPilot (after purifiers) and purified in Aurora ($O_2$, $H_2O$ removal and COS Selexsorb)) were mixed and allowed to react for 5 minutes. Mixture was divided into two equal parts: half of the mixture was mixed with catalyst and moved to the catalyst feeding syringe and the other half was moved to the own separate space in the feeding cylinder without catalyst addition. Fraction of the mixture without catalyst was first fed to the reactor. After 1 minute (to make sure that the system had reached its equilibrium) the catalyst/TEA/donor/n-pentane mixture was added to the reactor. 200 mmol hydrogen and 1400 g propylene were introduced into the reactor and the temperature was raised within around 20 minutes to the polymerization temperature (80 °C). The polymerization time after reaching polymerization temperature was 60 minutes, after which the reactor was allowed to cool and then the polymer formed was taken out from the reactor.

**Melt Flow Rate**

The melt flow rate (MFR) is determined according to ISO 1133 and is indicated in g/10min. The MFR is an indication of the melt viscosity of the polymer. MFR is determined at 190 °C for PE and 230 °C for PP. The load under which the melt flow rate is determined is usually indicated as a subscript, for instance, MFR2 is measured under 2.16 kg load and MFR21 is measured under 21.6 kg load. FRR21:2 is the ratio of MFR21 to MFR2.

**Bulk density**

Bulk Density (Apparent Density) is measured for PE examples according to the Method A of ASTM D1895 using a described therein apparatus with a 100 cm3 measuring cup and for PP examples using 20 or 30 cm3 measuring cup according to EN ISO 60.

**Examples**

$TiCl_4$ (CAS 7550-45-90) was supplied by commercial source.

2-ethylhexanol was supplied by commercial source.

3-butoxy-2-propanol was supplied by commercial source.

Viscoplex® 1-254, provided by Evonik.

Heptane was supplied by commercial source.

Toluene was supplied by commercial source.

$MgCl_2$, provided by Magnesia GmbH.

### Inventive Example 1 (IE1)

$MgCl_2$ (10 g, 1.0 wt% $H_2O$) raw material was loaded into a glass reactor in glove box under a nitrogen atmosphere. The reactor was sealed, transferred from the glove box and connected to a nitrogen line and stirrer. 2-EHA (29 mL) and PGBE (7 mL) (both taken from glove box under a nitrogen atmosphere) were then added via syringes. The solution was stirred at 100 °C for 3 h under a continuous flow of nitrogen and then for 16 h under static nitrogen atmosphere. Toluene (25 mL) was added via pump system and the solution was stirred at 100 °C for 5 h. Solution was cooled to 95 °C and heptane was added via pump system. The solution was then stirred at the 95 ° C for 1 h. The reactor was then cooled to 25 °C and transferred into a glove box under a nitrogen atmosphere. The solution was poured into a storage bottle, analyzed and used further for Ziegler-Natta catalyst synthesis.

19.0 g of $MgCl_2$ solution was mixed with 2-ethylhexyl citraconate (3.2 mL) and fed to 11.6 mL of $TiCl_4$ under stirring at 21 °C. Viscoplex 1-254 in heptane (50 wt%, 1.9 mL) was then added followed by addition of heptane (16 mL). The temperature of the mixture was then gradually increased to 90 °C (0.8 °C/min). The reaction was stirred for further 30 min at 90 °C. The solid material was washed 5 times: washings were made at 80 °C under stirring for 20 min with toluene (30 mL), for 10 min with $TiCl_4$ (15 mL), for 5 min with toluene (30 mL) and twice for 5 min with heptane (30 mL). After the stirring was stopped, the reaction mixture was allowed to settle for 10-15 min followed by siphoning between washes. After the washes, the temperature was decreased to 70 °C and the catalyst component was dried under vacuum for 1 h.

### Inventive Example 2 (IE2)

$MgCl_2$ (10 g, 1.0 wt% $H_2O$) raw material was loaded into a glass reactor in glove box under a nitrogen atmosphere. The reactor was sealed, transferred from the glove box and connected to a nitrogen line and stirrer. 2-EHA (29 mL) and PGBE (7 mL) (both taken from glove box under a nitrogen atmosphere) were then added via syringes. The solution was stirred at 140 °C for 3 h under a continuous flow of nitrogen. Toluene (25 mL) was added via pump system and the solution was stirred at 95 °C for 16 h under static nitrogen atmosphere. Heptane was added via pump system and the solution was then stirred at the 95 ° C for 1 h. The reactor was then cooled to 25 °C and transferred into a glove box under a nitrogen atmosphere. The solution was poured into a storage bottle, analyzed and used further for Ziegler-Natta catalyst synthesis.

20.7 g of $MgCl_2$ solution was mixed with 2-ethylhexyl citraconate (3.2 mL) and fed to 11.6 mL of $TiCl_4$ under stirring at 21 °C. Viscoplex 1-254 in heptane (50 wt%, 1.9 mL) was then added followed by addition of heptane (15 mL). The temperature of the mixture was then gradually increased to 90 °C (0.8 °C/min). The reaction was stirred for further 30 min at 90 °C. The solid material was washed 5 times: washings were made at 80 °C under stirring for 20 min with toluene (30 mL), for 10 min with $TiCl_4$ (15 mL), for 5 min with toluene (30 mL) and twice for 5 min with heptane (30 mL). After the stirring was stopped, the reaction mixture was allowed to settle for 10-15 min followed by siphoning between washes. After the washes, the temperature was decreased to 70 °C and the catalyst component was dried under vacuum for 1 h.

### Inventive Example 3 (IE3)

$MgCl_2$ (10 g, 0.7 wt% $H_2O$) raw material was loaded into a glass reactor in glove box under a nitrogen atmosphere. The reactor was sealed, transferred from the glove box and connected to a nitrogen line and stirrer. 2-EHA (29 mL) and PGBE (7 mL) (both taken from glove box under a nitrogen atmosphere) were then added via syringes. The solution was stirred at 100 °C for 2 h under a continuous flow of nitrogen and then at 140 °C for 2 h under a continuous flow of nitrogen. Toluene (25 mL) was added via pump system and the solution was stirred at 95 °C for 18 h under static nitrogen atmosphere. Heptane was added via pump system and the solution was then stirred at the 95 ° C for 1 h. The reactor was then cooled to 25 °C and transferred into a glove box under a nitrogen atmosphere. The solution was poured into a storage bottle, analyzed and used further for Ziegler-Natta catalyst synthesis.

19.0 g of $MgCl_2$ solution was mixed with 2-ethylhexyl citraconate (3.2 mL) and fed to 11.3 mL of $TiCl_4$ under stirring at 21 °C. Viscoplex 1-254 in heptane (50 wt%, 1.9 mL) was then added followed by addition of heptane (14.5 mL). The temperature of the mixture was then gradually increased to 90 °C (0.8 °C/min). The reaction was stirred for further 30 min at 90 °C. The solid material was washed 5 times: washings were made at 80 °C under stirring for 20 min with toluene (30 mL), for 10 min with $TiCl_4$ (15 mL), for 5 min with toluene (30 mL) and twice for 5 min with heptane (30 mL). After the stirring was stopped, the reaction mixture was allowed to settle for 10-15 min followed by siphoning between washes. After the washes, the temperature was decreased to 70 °C and the catalyst component was dried under vacuum for 1 h.

### Inventive Example 4 (IE4)

$MgCl_2$ (10 g, 3.5 wt% $H_2O$) raw material was loaded into a glass reactor in glove box under a nitrogen atmosphere. The reactor was sealed, transferred from the glove box and connected to a nitrogen line and stirrer. 2-EHA (39.5 mL) and PGBE (9.5 mL) (both taken from glove box under a nitrogen atmosphere) were then added via syringes. The solution was stirred at 100 °C for 4 h under a continuous flow of nitrogen, then under static nitrogen atmosphere for 16 h, then at 140 °C for 3 h under a continuous flow of nitrogen. Toluene (25 mL) was added via pump system and the solution was stirred at 95 °C for 2 h under static nitrogen atmosphere. Heptane was added via pump system and the solution was then stirred at the 95 ° C for 1 h. The reactor was then cooled to 25 °C and transferred into a glove box under a nitrogen atmosphere. The solution was poured into a storage bottle, analyzed and used further for Ziegler-Natta catalyst synthesis.

19.0 g of $MgCl_2$ solution was mixed with 2-ethylhexyl citraconate (3.2 mL) and fed to 11.2 mL of $TiCl_4$ under stirring at 21 °C. Viscoplex 1-254 in heptane (50 wt%, 1.9 mL) was then added followed by addition of heptane (14.5 mL). The temperature of the mixture was then gradually increased to 90 °C (0.8 °C/min). The reaction was stirred for further 30 min at 90 °C. The solid material was washed 5 times: washings were made at 80 °C under stirring for 20 min with toluene (30 mL), for 10 min with $TiCl_4$ (15 mL), for 5 min with toluene (30 mL) and twice for 5 min with heptane (30 mL). After the stirring was stopped, the reaction mixture was allowed to settle for 10-15 min followed by siphoning between washes. After the washes, the temperature was decreased to 70 °C and the catalyst component was dried under vacuum for 1 h.

## Inventive Example 5 (IE5)

$MgCl_2$ (10 g, 1.0 wt% $H_2O$) raw material was loaded into a glass reactor in glove box under a nitrogen atmosphere. The reactor was sealed, transferred from the glove box and connected to a nitrogen line and stirrer. 2-EHA (31.8 mL) and PGBE (7.6 mL) (both taken from glove box under a nitrogen atmosphere) were then added via syringes. The solution was stirred at 120 °C for 6 h under a continuous flow of nitrogen. Toluene (25 mL) was added via pump system and the solution was stirred at 95 °C for 16 h under static nitrogen atmosphere. Heptane was added via pump system and the solution was then stirred at the 95 ° C for 1 h. The reactor was then cooled to 25 °C and transferred into a glove box under a nitrogen atmosphere. The solution was poured into a storage bottle and analyzed.

Table 1. MgCl2 solution analytical results

|  | MgCl2 wt% | Toluene wt% | Heptane wt% | 2-EHA wt% | PGBE wt% | moisture ppm |
|---|---|---|---|---|---|---|
| IE1 | 2.98 | 24.5 | 29.4 | 30.4 | 7.6 | 1195 |
| IE2 | 2.73 | 25.0 | 30.1 | 25.5 | 7.0 | 805 |
| IE3 | 2.91 | 20.2 | 26.9 | 28.8 | 7.3 | 805 |
| IE4 | 2.84 | 22.2 | 27.3 | 27.3 | 7.6 | 836 |
| IE5 | 2.54 | 19.7 | 32.7 | 26.2 | 6.6 | 876 |

Table 2. Analytical results for catalysts

|  | Mg (wt%) | Ti (wt%) | Bis(2-ethylhexyl)citraconate (wt%) |
|---|---|---|---|
| IE1 | 15.4 | 3.1 | 19.4 |
| IE2 | 15.2 | 3.0 | 19.2 |
| IE3 | 15.5 | 3.1 | 18.3 |
| IE4 | 15.6 | 3.1 | 17.3 |

Table 3. Polymerization results

|  | Activity (kg pol/g cat/h) | MFR2 (g/10min) | BD (g/cm$^3$) |
|---|---|---|---|
| IE1 | 32.7 | 20.36 | 0.33 |
| IE2 | 34.2 | 17.46 | 0.37 |
| IE3 | 34.7 | 18.3 | 0.36 |
| IE4 | 36.7 | 18.41 | 0.35 |

These examples demonstrate that Ziegler-Natta catalysts prepared using the processes described herein are highly active. These highly active Ziegler-Natta catalysts can be prepared from solid Group 2 metal dihalide starting materials which contains more water than prior art methods.

**Claims**

1. A process for producing a solid Ziegler-Natta catalyst component, the process comprising steps:

   I. providing a solution of a Group 2 metal dihalide (IUPAC, Nomenclature of Inorganic Chemistry, 2005) by dissolving a solid Group 2 metal dihalide starting material in an alcohol mixture comprising a monohydric alcohol (A1) of formula ROH, where R is selected from a hydrocarbyl group of 3 to 16 carbon atoms, and a second alcohol (A2) comprising in addition to the hydroxyl group an ether moiety, wherein the ether moiety comprises from 2 to 18 carbon atoms, preferably the second alcohol (A2) is a C2 to C4 glycol monoether,

   wherein the Group 2 metal dihalide starting material in the alcohol mixture is heated to above 80 °C, preferably in the range of from 90 °C to 160 °C, more preferably in the range of from 100 °C to 140 °C, wherein the heating is conducted under a flow of an inert gas, preferably under a flow of nitrogen gas;

   II. contacting the solution of the Group 2 metal dihalide of step I with a compound in a liquid form of a transition metal of Group 4 to 10 of the Periodic Table (IUPAC, Nomenclature of Inorganic Chemistry, 2005), or of a lanthanide or actinide, preferably a transition metal of Group 4 to 6 of the Periodic Table (IUPAC, Nomenclature of Inorganic Chemistry, 2005) thereby providing a solid catalyst component; and
   III. recovering the solid catalyst component;
   wherein the amount of Group 2 metal originating from Group 2 metal dihalide constitutes 100 % of the whole amount of the Group 2 metal used in the process for producing the solid Ziegler-Natta catalyst component.

2. A process for producing a solid Ziegler-Natta catalyst component, the process comprising steps :

   I. providing a solution of a Group 2 metal dihalide (IUPAC, Nomenclature of Inorganic Chemistry, 2005) by dissolving a solid Group 2 metal dihalide starting material in an alcohol mixture comprising a monohydric alcohol (A1) of formula ROH, where R is selected from a hydrocarbyl group of 3 to 16 carbon atoms, and a second alcohol (A2) comprising in addition to the hydroxyl group an ether moiety, wherein the ether moiety comprises from 2 to 18 carbon atoms, preferably the second alcohol (A2) is a C2 to C4 glycol monoether,

   wherein the Group 2 metal dihalide starting material in the alcohol mixture is heated to above 80 °C, preferably in the range of from 90 °C to 160 °C, more preferably in the range of from 100 °C to 140 °C, wherein the solution of the Group 2 metal dihalide has a moisture content of below 1200 ppm, preferably below 1000 ppm, more preferably below 900 ppm measured by Karl Fischer titration, optionally wherein the heating is conducted under a flow of an inert gas, preferably under a flow of nitrogen gas;

   II. contacting the solution of the Group 2 metal dihalide of step I with a compound in a liquid form of a transition metal of Group 4 to 10 of the Periodic Table (IUPAC, Nomenclature of Inorganic Chemistry, 2005), or of a lanthanide or actinide, preferably a transition metal of Group 4 to 6 of the Periodic Table (IUPAC, Nomenclature of Inorganic Chemistry, 2005) thereby providing a solid catalyst component; and
   III. recovering the solid catalyst component;
   wherein the amount of Group 2 metal originating from Group 2 metal dihalide constitutes 100 % of the whole amount of the Group 2 metal used in the process for producing the solid Ziegler-Natta catalyst component.

3. The process according to claim 1 or 2, wherein in step I the total amount of liquid in the alcohol mixture decreases due to evaporation, preferably wherein the total amount of liquid in the alcohol mixture decreases by 3 vol% relative to the initial amount of liquid in the alcohol mixture, more preferably wherein the total amount of liquid in the alcohol mixture decreases by 5 vol% relative to the initial amount of liquid in the alcohol mixture, even more preferably wherein the total amount of liquid in the alcohol mixture decreases by 10 vol% relative to the initial amount of liquid in the alcohol mixture.

4. The process according to any one of claims 1-3, wherein the solid Group 2 metal dihalide starting material comprises water, optionally comprises greater than 0.5 wt% of water, greater than 1 wt% water, greater than 1.5 wt% water, greater than 2 wt% water, or greater than 3 wt% water, for example comprises in the range of from 0.5 wt% to 5 wt% water, from 1 wt% to 5 wt% water, from 1.5 wt% to 5 wt% water, from 2 wt% to 5 wt% water or from 3 wt% to 5 wt% water, based on the total weight of the solid Group 2 metal dihalide starting material.

5. The process according to any one of claims 1, 3 or 4 wherein the solution of the Group 2 metal dihalide of step I has a moisture content of below 1200 ppm, preferably below 1000 ppm, more preferably below 900 ppm measured by Karl Fischer titration.

6. The process according to any one of claims 1-5, wherein the Group 2 metal dihalide is $MgCl_2$ and the solid Group 2 metal dihalide starting material comprises $MgCl_2$, optionally wherein:

   (i) the monohydric alcohol (A1) is 2-ethylhexanol;
   (ii) the second alcohol (A2) is propylene glycol monobutyl ether; or
   (iii) the monohydric alcohol (A1) is 2-ethylhexanol and the second alcohol (A2) is propylene glycol monobutyl ether.

7. The process according to any one of claims 1-6, wherein the transition metal compound is a Group 4 to 6 transition metal compound, preferably a Group 4 transition metal compound, most preferably titanium tetrachloride.

8. The process according to any one of claims 1-7, wherein the molar ratio of monohydric alcohol (A1) : second alcohol (A2) in the alcohol mixture of step I prior to heating is in the range of 2.5:1 to 8:1, preferably in the range of 3:1 to 6:1, more preferably in the range of 3.5:1 to 5:1, and still more preferably is 4:1.

9. The process according to any one of claims 1-8, wherein the solution of the Group 2 metal dihalide obtained in step I contains a lower total water content than the water content of the solid Group 2 metal dihalide starting material, wherein the total water content refers to the total mass of water present.

10. The process according to any one of claims 1-9, wherein:

    (i) the molar ratio of alcohols:Group 2 metal is at least 1.0, preferably at least 1.5, more preferably is in the range of 1.5 to 10, even more preferably 2.0 to 4.0, wherein the alcohols comprise all alcohols of the alcohol mixture and the molar ratio is calculated relative to the amounts added in step I;
    (ii) one or more solubility increasing agent(s) is/are added in step I, optionally wherein the solubility increasing agent is selected from aliphatic hydrocarbon solvents, aromatic hydrocarbon solvents and other co-solvents comprising internal electron donors.

11. A Ziegler-Natta catalyst component obtainable, preferably obtained, by the process as claimed in any of the claims 1 to 10.

12. The Ziegler-Natta catalyst component according to claim 11, wherein

    the amount of transition metal of Group 4 to 10, preferably Ti, is in the range of 1 to 6 wt%,
    the amount of Group 2 metal, preferably Mg, is in the range of 10 to 20 wt%, and/or
    the amount of internal donor is in the range of 5 to 35 wt%,
    based on the total weight of the solid catalyst component,
    preferably wherein the amount of transition metal of Group 4 to 10, preferably Ti, is in the range of 2 to 4 wt%,
    preferably the amount of Group 2 metal, preferably Mg, is in the range of 15 to 19 wt%, and/or
    preferably the amount of the internal donor is in the range of 10 to 20 wt% in the solid catalyst component.

13. The Ziegler-Natta catalyst comprising a Ziegler-Natta catalyst component according to claim 11 or 12 or prepared according to the process of any of claims 1 to 10, a cocatalyst of group 13 compound (IUPAC, Nomenclature of Inorganic Chemistry, 2005), preferably an aluminium compound and optionally an external electron donor.

14. A process for producing polymers from $\alpha$-olefins having 2 to 10 carbon atoms or copolymers thereof with C2 to C12 $\alpha$-olefin comonomers in the presence of the Ziegler-Natta catalyst according to claim 13.

15. Use of the Ziegler-Natta catalyst component of claims 11 or 12, or prepared according to any of claims 1 to 10, for producing of C2 to C10 olefin polymers and copolymers thereof with C2 to C12 olefin comonomers.

# EP 4 733 329 A1

Europäisches Patentamt
European Patent Office
Office européen des brevets

## EUROPEAN SEARCH REPORT

**Application Number**

EP 24 20 9195

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP H11 322828 A (MITSUI CHEMICALS INC) 26 November 1999 (1999-11-26) * pages 13-14, paragraphs 112-119, example 1 * | 1-15 | INV.<br>C08F4/02<br>C08F4/654<br>C08F110/06 |
| X | CN 102 492 061 A (UNIV BEIJING CHEMICAL) 13 June 2012 (2012-06-13) * page 7, paragraph 32, example 2 * * page 12, paragraphs 66-74 * * page 13, table 1, example 2 * | 1-15 | |
| X | CN 102 875 704 A (PETROCHINA CO LTD) 16 January 2013 (2013-01-16) * pages 12-13, example 15 * | 1-15 | |
| X,D | WO 2021/175836 A1 (BOREALIS AG [AT]) 10 September 2021 (2021-09-10) * pages 19, inventive example 2 * * pages 20, inventive example 2 * | 1-15 | |
| A | WO 2020/127859 A1 (BOREALIS AG [AT]) 25 June 2020 (2020-06-25) * pages 19-21, inventive example 1 * | 1-15 | **TECHNICAL FIELDS SEARCHED (IPC)**<br><br>C08F |

The present search report has been drawn up for all claims

| Place of search | Date of completion of the search | Examiner |
|---|---|---|
| Munich | 19 March 2025 | Luka, Martin |

EPO FORM 1503 03.82 (P04C01)

## ANNEX TO THE EUROPEAN SEARCH REPORT
## ON EUROPEAN PATENT APPLICATION NO.

EP 24 20 9195

This annex lists the patent family members relating to the patent documents cited in  the above-mentioned European search report.
The members are as contained in the European Patent Office EDP file on
The European Patent Office is in no way liable for these particulars which are merely given for the purpose of information.

19-03-2025

| Patent document cited in search report | | Publication date | Patent family member(s) | | Publication date |
|---|---|---|---|---|---|
| JP H11322828 | A | 26-11-1999 | NONE | | |
| CN 102492061 | A | 13-06-2012 | CN | 102492061 A | 13-06-2012 |
| | | | WO | 2013075643 A1 | 30-05-2013 |
| CN 102875704 | A | 16-01-2013 | NONE | | |
| WO 2021175836 | A1 | 10-09-2021 | CN | 115210275 A | 18-10-2022 |
| | | | EP | 3875503 A1 | 08-09-2021 |
| | | | JP | 2023516036 A | 17-04-2023 |
| | | | US | 2023113200 A1 | 13-04-2023 |
| | | | WO | 2021175836 A1 | 10-09-2021 |
| WO 2020127859 | A1 | 25-06-2020 | CN | 113015753 A | 22-06-2021 |
| | | | EP | 3898720 A1 | 27-10-2021 |
| | | | US | 2021340288 A1 | 04-11-2021 |
| | | | WO | 2020127859 A1 | 25-06-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 376936 A1
- EP 591224 A1
- WO 2005118655 A
- EP 810235 A1
- EP 1042331 A1
- EP 0926165 A1

- WO 2021175836 A1
- WO 9212182 A
- WO 9618662 A
- WO 9858975 A
- WO 2006063771 A
- EP 428054 A

**Non-patent literature cited in the description**

- *Nomenclature of Inorganic Chemistry*, 2005

- **ZHANG et al.** *Can. Metall. Q.*, 1992, vol. 31, 189-194
- *CHEMICAL ABSTRACTS*, 7550-45-90